(19) **Europäisches Patentamt**
**European Patent Office**
**Office européen des brevets**

(11) **EP 2 529 516 B1**

(12) **EUROPEAN PATENT SPECIFICATION**

(45) Date of publication and mention
of the grant of the patent:
**11.12.2013 Bulletin 2013/50**

(51) Int Cl.:
*H04L 29/06* (2006.01)  *H04L 12/721* (2013.01)
*H04L 12/715* (2013.01)

(21) Application number: **10776091.0**

(22) Date of filing: **22.10.2010**

(86) International application number:
**PCT/EP2010/066003**

(87) International publication number:
**WO 2011/091871 (04.08.2011 Gazette 2011/31)**

(54) **PACKET ROUTING IN A NETWORK BY MODIFYING IN-PACKET BLOOM FILTER**

PAKETROUTING IN EINEM NETZWERK MITTELS ÄNDERUNG DES PAKETINTERNEN BLOOMFILTERS

ROUTAGE DE PAQUETS DANS UN RÉSEAU PAR MODIFICATION DE FILTRE DE BLOOM INTRA-PAQUET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2010 US 299493 P**

(43) Date of publication of application:
**05.12.2012 Bulletin 2012/49**

(73) Proprietor: **Telefonaktiebolaget LM Ericsson (publ)**
**164 83 Stockholm (SE)**

(72) Inventors:
 • **SÄRELÄ, Mikko**
   **FI-02700 Kauniainen (FI)**
 • **NÄSLUND, Mats**
   **S-168 36 Bromma (SE)**
 • **NIKANDER, Pekka**
   **FI-02420 Jorvas (FI)**

(74) Representative: **Egrelius, Fredrik**
   **Ericsson AB**
   **Patent Unit Kista Device, Service & Media**
   **Torshamnsgatan 21-23**
   **164 80 Stockholm (SE)**

(56) References cited:
 • IMAD AAD ET AL: "Packet Coding for Strong Anonymity in Ad Hoc Networks", SECURECOMM AND WORKSHOPS, 2006, IEEE, PI, 1 August 2006 (2006-08-01), pages 1-10, XP031087503, ISBN: 978-1-4244-0422-3

 • JOKELA PETRI ET AL: "Publish- Subscribe Internet Routing Paradigm. LIPSIN: Line Speed Publish /subscribe inter-networking. TR09-0001, version 1.0", PSIRP, PUBLISH-SUBSCRIBE INTERNET ROUTING PARADIGM, [Online] pages 1-2,1, XP002566408, Retrieved from the Internet: URL:http://www.psirp.org/files/Deliverable s/ PSIRP-TR09-0001_LIPSIN.pdf> [retrieved on 2010-02-02] cited in the application
 • ROTHENBERG C E; JOKELA P; NIKANDER P; SARELA M; YLITALO J: "Self-routing denial-of-service resistant capabilities using in-packet bloom filters", CONFERENCE PROCEEDING, 10 November 2009 (2009-11-10), pages 46-51, XP002613783, 2009 European Conference on Computer Network Defence (EC2ND) cited in the application
 • SAILESH KUMAR ET AL: "Segmented hash", ARCHITECTURE FOR NETWORKING AND COMMUNICATIONS SYSTEMS, 2005. ANCS 2005. SYMPOSIUM ON, IEEE, PISCATAWAY, NJ, USA, 26 October 2005 (2005-10-26), pages 91-103, XP031362752, ISBN: 978-1-59593-082-8
 • ANTONIS NIKITAKIS ET AL: "A Memory-Efficient FPGA-based Classification Engine", FIELD-PROGRAMMABLE CUSTOM COMPUTING MACHINES, 2008. FCCM '08. 16TH INTERNATIONAL SYMPOSIUM ON, IEEE, PISCATAWAY, NJ, USA, 14 April 2008 (2008-04-14), pages 53-62, XP031379331, ISBN: 978-0-7695-3307-0

**Description**

**Technical Field**

The present invention relates to packet forwarding in a network. In particular it relates to a method in which forwarding information is contained in a packet header so that a network node may determine along which link(s) the packet should be forwarded from the forwarding information in the packet header.

**Background**

A Bloom filter is a well-known space-efficient data structure that answers set membership queries with some chance of false positives. In an attempt to solve many of the implementation constraints faced of next generation networks (e.g., Gbps speeds, increasingly complex tasks, larger systems, high-speed memory availability, etc.), the use of small Bloom filters in packet headers for different purposes (routing, security, accountability, etc.) has been proposed in WO 2010/022767 (PCT/EP 2008/061167) and WO 2010/022799 (PCT/EP2008/063647). The key idea presented in these documents is a novel, space-and-computation-efficient source-routing and packet forwarding mechanism based on link identifiers and small Bloom Filters in packet headers. The basic idea expressed in WO 2010/022767 and WO 2010/022799 is that each link in the network is given a name (or "Link Identifier Tag") encoded as a bitstring and a path is named by computing a bitwise OR over all the links included. Such arrangement ensures that the packet is forwarded through the specified path (or tree).

In this document, we refer to the Bloom filters that are placed in the packet header, used in these type of applications, as an *in-packet Bloom filters* (iBF). In a way, an iBF follows a reverse approach compared to traditional BF-based approached previously described in the literature, for example by Broder and Mitzenmacher in Network Applications of Bloom Filters: A Survey. Internet Mathematics (2002) vol. 1 (4) pp. 485-509.

One feature of a Bloom Filter is that it may give a "false positive" - that is, when a Bloom Filter is queried to determine whether a particular link is one of the links whose  names is encoded into the Bloom Filter, the Bloom Filter query may incorrectly return the answer "yes". When a false positive occurs in Bloom Filter based routing, the result is that a packet additionally traverses one or more links that are not encoded in the Bloom Filter and along which it was not intended to send the packet. Typically, to minimize the probability of a false positive the length of the Bloom Filter needs to be large compared to the number of 1 s in a link name.

The basic approach described in WO 2010/022767 and WO 2010/022799 uses static link identifiers. A secure variant is described in WO 2011/091871 (PCT/EP 2009/062785). This is based on the idea of computing the link identifier "on the fly", for example based on information in the packet and information secret to each router, for example according to:

$$O=F(K, I, C)$$

where K is a key only known to the router and topology manager, I is some information taken from the packet that is unique to the session (such as sender and destination IP address and port numbers, or a publication identifier), and C is context specific information related to the processing, such as local identifier for the input and output links. A router that operates according to the principles of WO 2011/091871 will be referred to herein as a "secure router".

WO 2011/081588 (PCT/SE 2010/050001) further enables tying the iBF to per-packet unique data.

Forwarding security is especially needed for cases in which the path passes through multiple domains. Thus, in order to make iBFs viable for use in such multi-domain environments (e.g. end-to-end or inter-domain paths/trees), the forwarding must be secure. However, the security of the basic iBFs does not suffice and, to obtain forwarding security, it would be necessary for all forwarding elements to use a secure router. This is because of the way iBFs are constructed - should there be only one secure router on a path, it would be relatively easy for an attacker to guess how a iBF needs to be modified, in order to prompt the secure router to falsely forward it towards the path. In this sense, iBFs do not provide absolute security at any particular point in the network and instead employ a defence in depth. Each secure hop gives a  probabilistic security and having multiple secure hops makes sending unwanted traffic extremely difficult.

However, a secure router of the type described in WO 2011/091871 is more expensive to provide and operate than a simple "insecure" router. Also, the secure routers, to be effective, require per-session or per-packet processing. It would be preferable if secure routing could be effected without the need for every router to be a secure router, as this would reduce costs and would also make it easier to apply iBF-based routing in existing networks.

Additionally, some network usages require filtering out false positives, e.g. for security. As an example, if an operator uses iBF-based routing in its network, it will not want traffic being handled for one customer to end up in another customer's network, as this could lead to a security breach (this has been identified as a key security concerns for MPLS customers). However, the use of per-session or per-packet iBFs means that every flow, or every packet has a separate iBF, which means growth to the filtering tables and increased risk of false positives (see, for example, Luyuan Fang, ed. Security Framework for MPLS and GMPLS Networks, Internet draft draft-ietf-mpls-mpls-and-gmpls-security-framework-07.txt).

A further problem caused by false positives in iBF-based routing is that of "looping" and flow duplication. "Looping" happens when a series of false positives at consecutive routing nodes causes a packet to perform a loop and return to a border router in the multicast tree specified by the iBF. In such a situation, when the packet returns to the border router its iBF will match exactly the same links as before - and hence, the packet will inevitably be repeatedly sent around the loop until it is dropped when it reaches its hop count limit (TTL). Each round of looping causes an additional copy of the packet to be forwarded to all the receivers that reside in the sub-tree of the border router, which may be a considerable waste of resources.

"Packet Coding for Strong Anonymity in Ad-Hoc Networks" by Imad Aad et al. relates to a method in which a source routing list is encoded in a Bloom filter which is placed in a packet header. This document proposes that entries are removed from the Bloom filter to prevent routing loops, for example by using a counting Bloom filter in which bits are replaced by counters, so that a forwarding node can extract its hashed ID from the filter by reducing the corresponding counters by one. This document further proposes that the zeros in a Bloom filter that has counters can be converted to "redundant counters". Each forwarding node, after removing its entry from the routing list, randomly sets the values of these redundant counters to make it harder for a potential attacker to trace a packet.

## Summary

A first aspect of the invention provides a network node located within a domain. The node is adapted to receive, from another node, a packet having an in-packet Bloom filter or Bloom filter equivalent encoding information about a route within the domain. The node reversibly modifies the in-packet Bloom filter or Bloom filter equivalent, in a manner which is linear with respect to the operation used to add links to the Bloom filter or Bloom filter equivalent, by applying a bit permutation to the Bloom filter or Bloom filter equivalent. The node then forwards the packet, with its header containing the modified Bloom filter or Bloom filter equivalent, to another node.

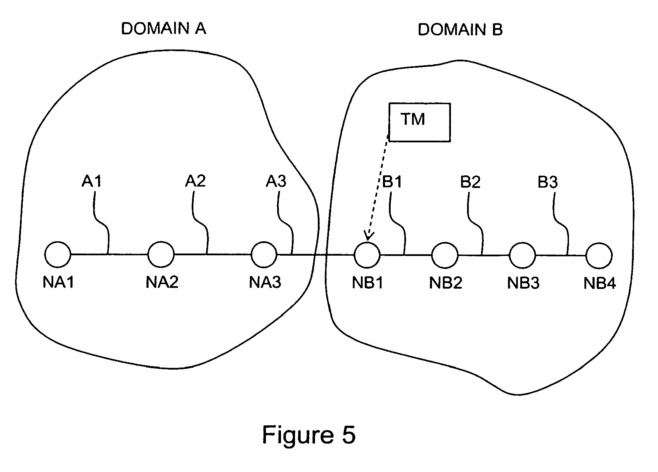

The node may forward the packet to another node in another domain. This is the case where the node is a border node that is responsible for forwarding the packet from one domain to another domain (such as the node NB1 in figure 5, which forwards a packet from domain B to domain A). Since the node modifies the in-packet Bloom filter or Bloom filter equivalent before forwarding the packet to the another domain, the invention makes it possible to employ simple insecure routers within a trusted network core, and only requires that complex operations are performed at a domain boundary. In the example of figure 5, for example, nodes NB2, NB3 and NB4 in domain B may employ simple insecure routers.

Alternatively, the node may forward the packet to another node in the domain. Since the node modifies the in-packet Bloom filter or Bloom filter equivalent before forwarding the packet, if a series of false positives at consecutive forwarding nodes should cause the packet to perform a loop, when the packet returns to the node the in-packet Bloom filter or Bloom filter equivalent contained in the packet will be different to the in-packet Bloom filter or Bloom filter equivalent contained in the packet when it was originally received at the node. The packet will therefore not be forwarded again around the loop. The invention is therefore effective at preventing a packet being repeatedly sent around a loop.

A second aspect of the invention provides a network node associated with a domain and adapted to generate a Bloom filter or Bloom filter equivalent encoding information about a route within a domain of a network. The node reversibly modifies the Bloom filter or Bloom filter equivalent, in a manner which is linear with respect to the operation used to add links to the Bloom filter or Bloom filter equivalent, by applying a bit permutation to the Bloom filter or Bloom filter equivalent, and forwards the modified Bloom filter or Bloom filter equivalent to another node for inclusion in the header of a packet to be sent from the another node. The first aspect of the invention is appropriate where the in-packet Bloom filter or Bloom filter for the route is generated by sending a collector packet along the route. The second aspect is complementary to the first aspect, and is appropriate where the in-packet Bloom filter or Bloom filter for the route is generated by a node such as a topology manager that is at least partially aware of the network routing information and capabilities.

A node of the first or second aspect may modify the Bloom filter or Bloom filter equivalent so as not to substantially increase the number of "1 "s in the Bloom filter or Bloom filter equivalent.

A node of the first or second aspect may modify the Bloom filter or Bloom filter equivalent by applying a random or pseudo-random bit permutation to the Bloom filter or Bloom filter equivalent. (By a "random" permutation is meant that the permutation is drawn randomly from among the set of all n! permutations on n bits, with each of the n! permutations having the same probability. By "pseudorandom" permutation is meant that the permutation is drawn in a way which for all practical purposes is indistinguishable from a random permutation.)

A node of the first or second aspect may modify the Bloom filter or Bloom filter equivalent by applying a bit permutation that is dependent on at least one of a time-dependent key and a session identifier.

A node of the first or second aspect may further modify the Bloom filter or Bloom filter equivalent by encrypting the Bloom filter or Bloom filter equivalent. It may concatenate the Bloom filter or Bloom filter with t pre-specified bits (where t is a positive integer) before encrypting the Bloom filter or Bloom filter equivalent.

A third aspect of the invention provides a network node, the network node being located within a domain and adapted to receive, from another node, a packet having a packet header containing an in-packet Bloom filter or Bloom filter equivalent that contains routing information representing a route within the domain and to which a modification, comprising a bit permutation that is linear with respect to the operation used to add links to the Bloom filter or Bloom filter equivalent has been applied. The node is adapted to recover the routing information from the Bloom filter or Bloom filter equivalent, by applying a reverse bit permutation to the Bloom filter or Bloom filter equivalent. Whereas the first and second aspects of the invention relate to modification of the in-packet Bloom filter or Bloom filter equivalent before sending the packet, this aspect of the invention relates to a node that receives a packet that contains a modified in-packet Bloom filter or Bloom filter equivalent.

A node of the third aspect may forward the packet according to the recovered routing information.

The modification applied to the Bloom filter or Bloom filter equivalent may comprise a bit permutation and the network node may be adapted to recover the routing information by applying a reverse bit permutation to the Bloom filter or Bloom filter equivalent.

The modification applied to the Bloom filter or Bloom filter equivalent may further comprise an encryption and the network node may be adapted to recover the routing information by decrypting the Bloom filter or Bloom filter equivalent.

A node of the third aspect may compare the fill factor of the decrypted Bloom filter or Bloom filter equivalent with a preset threshold, and to drop the packet if the fill factor of the decrypted Bloom filter or Bloom filter equivalent exceeds the preset threshold.

A fourth aspect of the invention provides a method of routing a packet comprising receiving, at a node in a domain, a packet having an in-packet Bloom filter or Bloom filter equivalent encoding information about a route within the domain, and reversibly modifying the in-packet Bloom filter or Bloom filter equivalent in a manner which is linear with respect to the operation used to add links to the Bloom filter or Bloom filter equivalent, by applying a bit permutation to the Bloom filter or Bloom filter equivalent. The method then comprises forwarding the packet with its header containing the modified Bloom filter or Bloom filter equivalent to another node.

A fifth aspect of the invention provides a method of providing packet routing information, the method comprising generating, at a node, a Bloom filter or Bloom filter equivalent encoding information about a route within a domain of a network, and reversibly modifying the Bloom filter or Bloom filter equivalent in a manner which is linear with respect to the operation used to add links to the Bloom filter or Bloom filter equivalent, by applying a bit permutation to the Bloom filter or Bloom filter equivalent. The method then comprises forwarding the modified Bloom filter or Bloom filter equivalent to another node for inclusion in the header of a packet to be sent from the another node.

A sixth aspect of the invention provides a method of providing packet routing information, the method comprising receiving, at a network node, a packet having a packet header containing an in-packet Bloom filter or Bloom filter equivalent that contains routing information to which a modification comprising a bit permutation has been applied, the modification being linear with respect to the operation used to add links to the Bloom filter or Bloom filter equivalent, the routing information representing a route within the domain. The method then comprises recovering the routing information from the Bloom filter or Bloom filter equivalent, by applying a reverse bit permutation to the Bloom filter or Bloom filter equivalent.

A method of the sixth aspect may further comprise forwarding the packet according to the recovered routing information.

**Brief Description of the Drawings**

Preferred embodiments of the present invention will be described by way of example with reference to the accompanying figures in which:

Figure 1 illustrates the basic principles of an iBF-based routing method;
Figure 2 illustrates the dynamic computation of a link identifier;
Figure 3 illustrates a permutation of a bitstring;
Figure 4 illustrates a reverse permutation of a bitstring;
Figure 5 illustrates an embodiment of the according to the present invention;
Figure 6 is a block flow diagram of a method according to the present invention;
Figure 7 is a block flow diagram of a method according to the present invention;
Figure 8 is a block flow diagram of a method according to the present invention; and

Figure 9 is a block flow diagram of a method according to the present invention.

Detailed Description

The present invention requires use of secure iBF routers only at the edge of a network, and makes it possible to use simple basic iBF routers in the core of the network.

An iBF that encodes forwarding information for a path may be formed in any suitable manner, for example by hop-by-hop collection by sending a packet containing a collecting Bloom filter along the path for which the iBF is required. Within a domain the iBF is collected and formed as described in WO 2010/022767 and WO 2011/091871. Before (preferably immediately before) the iBF is passed to a neighbouring domain, the iBF is reversibly transformed in a manner which is linear with respect to the operation used to generate the Bloom filter, for example using a keyed bit permutation function. The permutation function will move each bit of the iBF from its place to another place in such a way that an attacker cannot guess the original positions of the bits. It is important to note, that the reversible transformation need be performed only once, at the boundary of the trusted domain. Other nodes within the trusted domain need not be aware of the permutation or other modification used. In effect, the permutation or other modification makes each router on a path behave as a secure router against any outside attacker.

A bit permutation function is a function that moves bits of a bitstring from one position in the bit string to another (Y. Hilewitz, Z Shi and R. Lee. "Comparing Fast Implementations of Bit Permutation Instructions", in proceedings of 38th annual Asilomar Conference on Signals, Systems, and Computers, pp. 1856-1863, 2004). As an example, if we name the bits of the original string as B1, B2, B3, and B4 so that the index number indicates the position of the bit in the string (i.e. B1 B2B3B4 is the original bitstring), then B4B1 B3B2 is a potential permutation of the string. In our case, a good pseudo-random permutation function is a function that provides an essentially equal chance for a given bit of the original bitstring to end up at any location in the permuted bitstring.

The permutation may be a static permutation, ie where the same permutation is always used. For additional security, the permutation (or other modification) that is used may be changed, for example at fixed time intervals, or may be tied to a given session identifier (such as flow id or a pair of IP addresses).

In the embodiments described below, we assume that an inter-domain iBF is formed by the routers collecting the iBF by a hop-by-hop method. That is, a collector packet is sent via the path for which an iBF is wanted. Each router along the path stamps a "collecting" iBF in the packet with the link identifier hop-by-hop corresponding to a link of the path. Then, when the collector packet arrives at a secure router, for example at a domain boundary, the secure router implements the permutation function disclosed herein, ie, it additionally permutes the bits in the "collecting" iBF as well as adding its respective link identifier. The resultant iBF is then passed to a second domain, and further link identifiers may be added to the iBF by routers in the second domain (and in principle a secure router at the boundary of the second domain may apply a further permutation or modification before forwarding the iBF to a third domain, as the method works when there are multiple trust boundaries and multiple bit permutations performed on the path). However, the invention is not limited to collecting the iBF by a hop-by-hop method, and the invention may be applied to any arrangement in which an iBF is formed for a path, for example where an explicit, off-line iBF path computation element (eg a topology manager) takes into account the permutation function(s) used and their respective location along a given path or tree.

A preferred embodiment of the invention is essentially based on using pseudo-random permutations. Permutations such as bit permutations are always invertible (reversible), and use of a permutation thus allows the iBF to be reversibly transformed. That is, the invertibility of the permutation ensures that, for each domain, the 1-bits in the iBF that describe the links used for a particular flow will be in their original positions after the reversing of the permutation. Furthermore, the number of 1-bits does not increase before the packet is sent to the other domain, as would happen e.g. if the iBF were encrypted instead. This enables the other domains to add further links identifiers into the "collecting" iBF - if the number of 1-bits were to increase before the packet is passed to another domain, the BF might become "full" with 1 s, and the OR-ing in of link identifiers for links in the other domain would not work properly. In addition, increasing the number of 1-bits would lead to an increase in the probability of false positives. Moreover, since the permutation is pseudo-random, we can ensure that existing statistical analysis of "false positive rates" apply.

The formation of an iBF ("Z-formation") will be described, as background. In P. Jokela, A. Zahemszky, C. Esteve Rothenberg, S. Arianfar, P. Nikander, "LIPSIN: Line speed publish/subscribe inter-networking", Proceedings of ACM SIGCOMM 2009 and PCT/EP 2008/061167 ("LIPSIN"), a packet forwarding mechanism based on Link Identifiers (LIDs), instead of IP addresses (or other types of end-to-end addresses) is described. The idea is to compute each forwarding path on a separate path computation element, called the Topology layer in LIPSIN. Each computed forwarding path (or tree) contains a set of nodes, that must be passed on the way from the source to the destination. Given the set of nodes, the needed outgoing LIDs were added to a Bloom filter, making a compact representation of the forwarding tree. This Bloom filter, called as an iBF, was passed from the Topology layer to the data source, to be put into the data packet header when sent out from the source node. When a packet is routed using the iBF, each router on the path checks the forwarding identifier to see if any of its own outgoing interface LIDs had been included in the iBF. If that was the case, the packet was forwarded out of that interface. As a result of this mechanism, forwarding is a very efficient operation, consisting (in the basic form) of one bit-wise AND operation and one comparison operation.

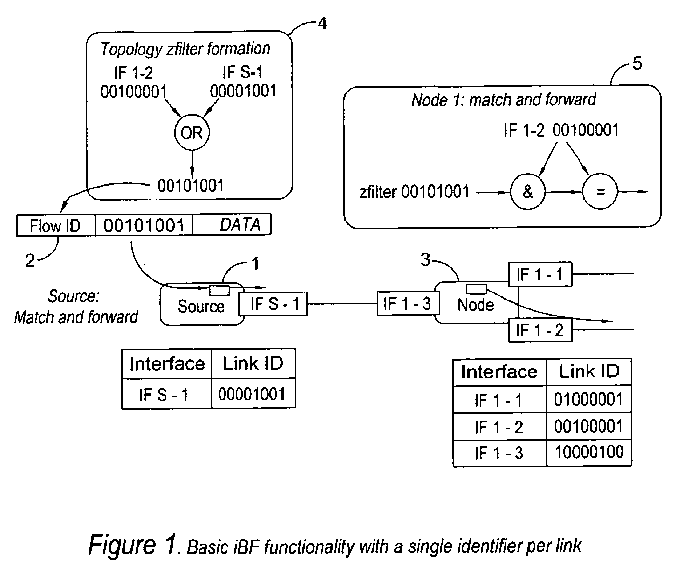

Figure 1 shows the general principle of Bloom filter based routing, according to LIPSIN. LIPSIN described a packet forwarding mechanism based on Link Identifiers (LIDs), instead of IP (or other types of end-to-end) addresses. The principle is to build a forwarding path on the Topology layer, or at a separate path computation element such as a Topology Manager), the forwarding path containing a set of nodes through which a packet needs to pass on its way from the source to the destination. From this set of nodes, the required outgoing LIDs are used to construct a Bloom filter, making a compact representation of the forwarding tree. In figure 1 the Bloom filter is generated by a process denoted schematically as 4, in the example shown by "OR-ing" the LIDs of the links forming the path. This Bloom filter, or "iBF", is put into the header of a data packet 2 to be sent out from a source node 1. (The process 4 of generating the Bloom filter may be carried out at the source node 1 or it may be carried out elsewhere, for example at a Topology Manager (not shown in figure 1). The packet 2 is shown as containing a Flow ID which identifies the particular packet flow, and data.

Each intermediate node or router 3 on the path performs a matching operation (denoted schematically as 5 in figure 1) on the iBF in a received packet, to check if any of its own outgoing interfaces' LIDs had been included in the iBF carried in the packet. If this is the case, the packet is forwarded out of that interface(s). As a result of this mechanism, forwarding is a very efficient operation in [LIPSIN], consisting (in the basic form) of one bit-wise AND and one comparison operation.

In Christian Esteve and Petri Jokela and Pekka Nikander and Mikko Särelä and Jukka Ylitalo, "Self-routing Denial-of-Service Resistant Capabilities using In-packet Bloom Filters", proceedings of European Conference on Computer Network Defence (EC2ND) 2009 and WO 2011/091871 ("Z-FORMATION), instead of maintaining an explicit forwarding table that contains a number of Link identifiers (or Link Identifier Tags, see [LIPSIN]) for each outgoing interface, a more sophisticated approach was used. That approach was based on dynamically computed, per-flow or per-packet link identifiers. For each incoming packet, a fixed function Z was used to compute the corresponding link identifiers using

·(i) a periodically changing secret key K,
·(ii) some in-packet information / (a flow or per-packet identifier), part of which may be designated as a dvalue for z-Filter variation, and
·(iii) the incoming and outgoing interface indices (In, Out).

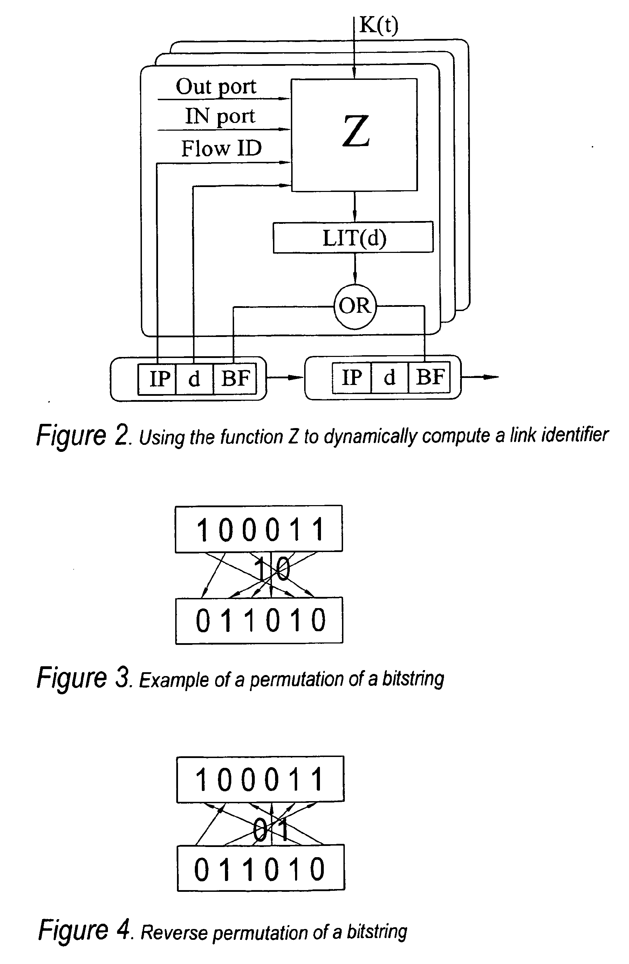

The function Z produces a dynamically computed link identifier. This is depicted in Fig. 2, which shows link identifier(s) being computed upon receipt of an incoming packet 6 at a node. The function Z compute a link identifier using, as inputs, the incoming and outgoing interface indices (IN port # and OUT port #), the time-dependent key K(t), in-packet information, in the example of Figure 2 a Flow ID, and a $d$ value. The function $Z$ computes one or more link identifiers LIT(d). As in LIPSIN, also here each LIT(d) = $Z$ $(I, K(t), In, Out)$ is a Bloom mask of size $m$.

Note that separating the "d value" out from the Flow ID / is optional; from the conceptual point of view, the d-value may be considered as part of the Flow ID.

As the iBF is now constructed using dynamic link identifiers instead of static link identifiers, the resulting iBF are bound to the flow ID, a specific time period, and the input interface index, in addition of being bound to the output interface index, as in [LIPSIN]. Especially, having the Flow ID / as an input parameter tied the given iBF to only those packets carrying the specified Flow ID.

While the [LIPSIN] solution was originally designed to be used in a publish/subscribe style networking with separate rendezvous and topology functions, it is possible to use it also in other types of networks. From that point of view, in this invention we preferably utilise hop-by-hop IP forwarding as a topology function and each target end-node as the rendezvous point.

Securing iBFs using permutations at the domain edges will now be described. For some uses, static permutations are sufficient. Here we describe the method for securing iBFs using keyed permutations at a domain edge. This section describes the most essential new functionality disclosed in this invention.

Assume that an iBF being collected for a path between two domains A and B. Let the path consist on links A1-A2-A3-B1-B2-B3, as shown in figure 5. We further assume that the collection process creates a reverse direction iBF, in other words, the destination along the path, NB4, sends a signaling packet towards A1 along the path, initially along the link B3. The signalling packet contains a "collecting" iBF field that is initially empty, i.e. contains all 0-bits.

From the point of view of node NB4, domain B is a "trusted domain", in that there is no objection to nodes in domain B becoming aware of routing information relating to a path in domain B. Domain A, however, is not a trusted domain from the point of view of node NB4, so that it is preferred that a node in domain A does not become aware of routing information relating to a path in domain B.

Each router on the path adds the link identifier for the "reverse" next hop (towards B3) to the "collecting" iBF by bitwise ORing the received "collecting" iBF and the appropriate link identifier together, resulting in a new, augmented "collected" iBF, to be sent in a signaling packet to the next node. For example, router NB3 adds the link identifier for the link B3 (which is the "reverse" next hop towards NB4) to the "collecting" iBF by bitwise ORing the received "collecting" iBF and the link identifier for link B3 together, and send the new, augmented iBF to the next node (NB2). Before the signaling packet is passed from domain B to domain A, the last router within the domain B, router NB1, computes a pseudo-random permutation of the "collecting" iBF gathered so far. Let the so-far-collected iBF that is received at router NB1 be zFB1,B2,B3 (i.e. B1 OR B2 OR B3) and let the permutation be P(zFB1,B2,B3). Then router NB1 replaces the iBF zFB1,B2,B3 with the permuted iBF P(zFB1,B2,B3), and sends a packet containing the permuted iBF P(zFB1,B2,B3) to the boundary router of domain A (router A3 in figure 5).

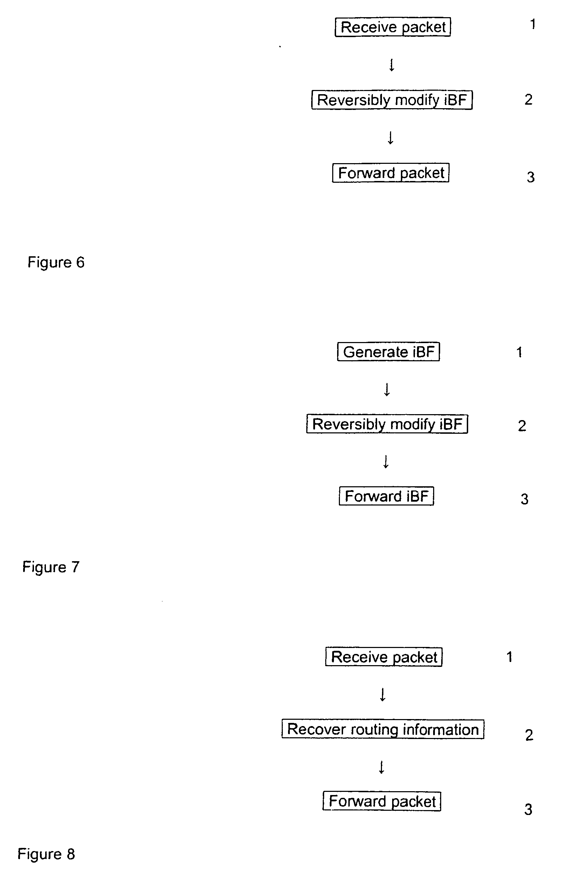

Figure 6 is a block flow diagram showing the principal steps carried out at node NB1. Initially at step 1, node NB1 receives a packet, in this example, from node NB2, that contains an iBF in the packet header. Node NB1 adds the link identifier for the "reverse" next hop (that is for the hop to node NB2 in figure 5) to the iBF and then, at step 2 of figure 6, performs a reversible modification on the iBF as described above. Node NB1 then forwards, at step 3 of figure 6, the packet containing the modified iBF to node NA3.

The iBF is then passed through domain A, with each router of domain A adding the link identifier for the "reverse" next hop. Consequently, in the example of figure 5 the final "collected" iBF will be:

A1 OR A2 OR A3 OR P(B1 OR B2 OR B3),

where Ax denotes the link identifier as used by router x and P is the permutation function used by router NB1. Note that the P function does not change the number of 1-bits in the iBF, but it merely moves them to pseudo-random positions.

Once the iBF has been collected, the sender-node A1 can use it to send packets along the path. At nodes NA1, NA2, NA3, NB2 and NB3 any iBF-containing data packet may be handled as disclosed in prior art. However, at the first node within a receiving domain (node NB1 in this case), an inverse of the pseudo-random permutation is applied to the iBF.

Figure 8 is a block flow diagram showing the principal steps carried out at the node NB1 when a packet is sent from domain A to domain B. Initially, at step 1, the node NB1 receives a packet, in the example of figure 5 from node NA3. The packet contains, in its header, an iBF. In the example of figure 5, node NB1 will receive a packet containing an iBF as sent by A1, i.e. A1 OR A2 OR A3 OR P(B1 OR B2 OR B3). The node NB1 then, at step 2 of figure 8, applies the reverse modification to the iBF to recover the routing information - ie, in the example of figure 5 node NB1 applies the reverse permutation $P^{-1}$ to the received iBF, which by virtue of linearity of P with respect to the operation (in this example the OR operation) used to add links to the Bloom-filter (see below), results in $P^{-1}$ (A1 OR A2 OR A3) OR B1 OR B2 OR B3. The iBF obtained by applying the reverse permutation in turn can be used by nodes NB1, NB2, and NB3 according to known iBF routing techniques, so that, at step 3 of figure 8, node NB1 forwards the packet according to the recovered routing information.

Requirements for the permutation function P (or other modification) will now be explained in detail.

We require the permutation function to have the following property:

Let the operator + denote the building operation used to add a link to the Bloom filter (this is the OR operation in the above example). Let P( ) be a pseudo-random permutation, and $P^{-1}$ ( ) be its reverse. Then, it is required that, for any equally long bit strings x, y, and z:

$$P^{-1}(x + P(y + z)) \equiv P^{-1}(x) + P^{-1}(P(y + z)) \equiv P^{-1}(x) + y + z$$

In other words, P needs to be linear with respect to the operator "+". A bit permutation function is an example of a function that satisfies that property, although any permutation function that satisfies the requirements may be used in the invention.

Additionally, for the Bloom filter based forwarding to work properly, we require the other property of that any value generated as a result of applying the permutation P, such as the value sent to the A-domain, i.e. P(B1 OR B2 OR B3), must not affect packet forwarding in domain A. That is, the generated value must interoperate with whatever BF-routing scheme that domain A uses. Hence, use of encryption at the permutation would not work in many cases as it would probably not preserve Bloom Filter properties for domain A, e.g. would probably not maintain the false positive rate etc.

Figure 3 shows an example of a bit permutation function and Figure 4 shows the corresponding reverse permutation. It will be seen that the effect of applying the bit permutation function of figure 3 and the corresponding reverse permutation of figure 4 is to recover the original bitstring.

In a preferred embodiment the permutation function is not a static permutation function. In a preferred embodiment the permutation function depends both on time and the packet contents, and this is achieved using a keyed permutation function of the form:

$$P_{K, I}( \ ),$$

where the symbol denotes the input string, K denotes a key that may be computed based on some periodically changing key material $K_d$, and I denotes a session identifier (which can be deduced from the packet). K and I together form an index, denoting the specific permutation used to process the input string.

There are several known examples of keyed permutation functions. As a specific example, pseudo random bit permutations can be used (see e.g. Y. Hilewitz, Z Shi and R. Lee. "Comparing Fast Implementations of Bit Permutation Instructions", in proceedings of 38th annual Asilomar Conference on Signals, Systems, and Computers, pp. 1856-1863, 2004).

The session identifier can be, for example, a rendezvous identifier, an MPLS label, or some information from the IP header of the packet (and potentially the transport header), such as source and destination IP addresses (or subnet prefixes), port numbers and protocol type, or any combination thereof.

To summarise, the permutation function P (or other modification) must satisfy one or more, and preferably all, of the following requirements:

- Security: an attacker must not be able to infer the original positions of the 1-bits from the permuted bitstring.
- Reversibility (all permutations are reversible and so satisfy this requirement).
- Compatibility with other iBF operations: the number of 1-bits that result from applying P must be (approximately) equal to the number of 1-bits in the input.

Additionally, the key is preferably computable on-demand based on a router's private information and on information related to a session (e.g. flow identifier). A number of methods can be used for this, such as cryptographic hash functions.

Additionally, the permutation (or other modification) is preferably non-static- so that the positions of the bits signifying certain links in the path are dependent on the flow, even if most or all routers use the non-secure variant of iBFs.

From the point of view of security, it should be noted that the probability of guessing a valid link ID that is part of some iBF, z, is the same as guessing the bit locations where the corresponding bits are moved to by P(z). Thus, these two probabilities are the same (dependent on the number of bits added by each link) and the P function does not make it harder, nor easier, to guess a link inside the domain.

The function P may, for instance, be implemented as follows. Assume the total number of bits in the iBF is n. Assume also we have a random cryptographic permutation, F, that is applied on the set {1, 2, ..., n }. Such permutation can (as long as n is even) be constructed from the well-known Luby-Rackoff construction (Luby, M. and Rackoff, C. How to construct pseudo-random permutations from pseudo-random functions, Advances in cryptology "CRYPTO'85", Springer Verlag). Now, to permute the bit string x(1), x(2), ..., x(n), we just map it to x(F(1)), x(F(2)), ... , x(F(n)).

The invention is not limited to the embodiments described above, and there are variations that can still solve the problems addressed by this invention disclosure.

For example, if each domain utilizes its own iBF, then the filter used within a domain can be encrypted at the domain border. In the above example of figure 5, of creating an iBF for the path from NA1 to NB4 via links A1-A2-A3-B1-B2-B3, this would mean that the forwarding identifier for the path would contain a concatenation of two, potentially shorter, Bloom Filters zF NA1-NB1 and zF NB1-NB4. This is quite suitable for the unicast case, and for cases in which an iBF is sent across a trust boundary but where the iBF will not be changed or augmented by the receiver. An example of the latter could be sending the iBF from a provider edge (PE) router to a customer edge (CE) router.

However, this variant may be problematic if it were applied to a case where an inter-domain multicast tree is specified (e.g. the number of bits in the filter is increased). Consider the following example: A multicast tree from A to (B1,B2,..., B20) is specified. Then the forwarding identifier according to this variation should contain separate iBFs for 21 different domains - and it should have enough structure for each domain to be able to tell which part of the forwarding identifier specifies its local encrypted iBF.

In the description of the embodiment of figure 5, the iBF for the portion of the path in domain B (ie the portion from NB4 to NB1) was generated by sending a collector packet from node NB4. The invention is not however limited to this, and the iBF for the portion of the path in domain B may alternatively be generated by a Topology Manager TM that has knowledge of the network topology of domain B. The generated iBF is then sent from the Topology Manager TM to node NB1. When node NB1 received the iBF it then applies a reversible modification to the iBF as described above, puts the modified iBF into the header of a packet, and forwards the packet to domain A.

Figure 7 is a block flow diagram showing the principal steps carried out at the Topology Manager TM. Initially at step 1, the Topology Manager TM generates an iBF for the portion of the path in domain B and then, at step 2 of figure 7, the Topology Manager TM performs a reversible modification on the iBF as described above. The Topology Manager TM then forwards, at step 3 of figure 7, a packet containing in its header the modified iBF to node NB1, for inclusion in the header of a packet to be sent from the node NB1.

In principle, the Topology Manager TM could generate the iBF for the portion of the path in domain B, itself apply a reversible modification to the iBF, and forward the modified iBF to node NB1. When node NB1 received the iBF it puts the modified iBF into the header of a packet, and forwards the packet to domain A. This embodiment would require that the node NB1 has knowledge of the modification applied to the iBF by the Topology Manager TM, so that node NB1 can apply the reverse modification to the iBF in a packet received from domain 1 in order to recover routing the routing information. (To do this, the Topology Manager TM and node NB1 need to share knowledge of the permutation to be used. Either the Topology Manager TM or node NB1 may decide which permutation to use, and then inform the other of the chosen permutation.)

In a yet further variant, it is in principle possible for the Topology Manager TM to generate the iBF for the portion of the path in domain B, and forward the iBF to a another node in domain A (not shown), which applies a reversible modification to the iBF, and forward the modified iBF to node NB1. This would again require that the node NB1 has knowledge of the modification applied to the iBF. (To do this, the node in domain A and node NB1 need to share knowledge of the permutation to be used. Either the node in domain A or node NB1 may decide which permutation to use, and then inform the other of the chosen permutation.)

Figure 5 shows the Topology Manager TM within domain B but, in principle, the Topology Manager TM could be outside domain B.

The variant of encrypting at the customer edge for increased security will now be described. In the embodiments described above the iBF was modified by applying a bit permutation. The invention is not however limited to this, and the iBF may be modified in other ways provided that a potential attacker cannot deduce (or cannot easily deduce) the original routing information from the modified iBF.

As one example, as briefly discussed above, the iBF may be encrypted before it is sent outside its originating domain. The encryption may be additional to the bit permutation, that is the encryption may be applied after the bit permutation. (It should be noted that a bit permutation may be considered as an "encryption" in that it converts one bit string into another bit string that (in principle) cannot be deciphered by someone is not aware of the encryption process used. However, a bit permutation is not a particularly strong encryption, and a more secure encryption would preferably be applied after the bit permutation if it were desired to protect the contents of the iBF. While encryption may be undesirable in some cases, there are some cases where encrypting the iBF can be applied, such as cases where the recipient will not modify the iBF. In those cases changing the maximum fill factor can be used to make brute force attacks more difficult.

As disclosed in prior art, a maximum Bloom filter fill factor defines the maximum number of 1-bits in a Bloom filter as a percentage of the total number of bits. As an example, a 256-bits long BF with maximum fill factor of 0.4 is only allowed to have 102 bits set to 1. When fill-factor-based filtering is applied to iBF-base forwarding, each router in the network first checks whether the iBF in the incoming packet has a fill factor larger than the specified maximum value, and drops the packet if it does.

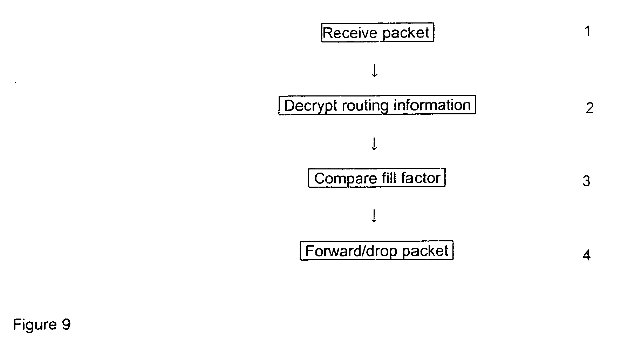

Figure 9 is a block flow diagram illustrating the principal steps of this method. At step 1 a packet is received (for example node NB1 of figure 5 receives a packet from domain A) that contains routing information in the form of an encrypted iBF in its header (with the encryption preferably having been applied after a bit permutation had been applied to the iBF), and at step 2 the node decrypts the routing information to obtain a decrypted iBF. At step 3 of figure 9 the node compares the fill factor of the decrypted iBF with a threshold, for example checks whether the fill factor of the decrypted iBF exceeds 0.4. At step 4 of figure 9 the node drops the packet if the fill factor of the decrypted iBF exceeds the threshold, and otherwise forwards the packet according to the routing information in the decrypted iBF (after performing a reverse bit permutation if the encryption had been applied after a bit permutation).

The effects of fill-factor-based filter will now be considered in more detail.

Let us denote a pair of encryption and decryption functions applied to a bitstring ( ) as E( ) and D( ), correspondingly. An iBF encryption system works so that a border router sends an encrypted iBF to its neighbour router, i.e. it send E(zf) instead of zf, to prevent the neighbour from modifying the filter or recovering any routing information from it. The neighbour, when using the iBF for routing, will then place the encrypted version of the iBF into a packet in place of the iBF. When the border router receives, from the neighbour router a packet containing the encrypted iBF, the border router applies the appropriate decryption function D( ) to the received iBF, which in the case of an encrypted iBF returns the original iBF.

However, a dishonest neighbour can still try a brute force technique by constructing random cipher texts, i.e. sending many packets and always modifying the encrypted version of the iBF so that the each packet contains different routing information. When any of such packets is received in the trusted domain, the border router decrypts the iBF field using D( ) and then attempts to forward the packet to those links that match the iBF recovered by applying D( ). Since the dishonest neighbour is putting different routing information into each packet, the result of the decryption will be different for each packet so that each packet is routed differently within the trusted domain. This sort of attack may be countered by setting the maximum allowable fill factor of the iBF below 0.5, for example, to 0.4, since this affects the probability of creating a valid iBF, as the decryption of random strings can be assumed to produce strings with random distribution of 0s and 1 s. When using 256-bits long Bloom filters, the binomial distribution ensures that the probability of getting a string with a smaller fill factor is in the order of $5*10^{-4}$ (approximated using a standard distribution with a mean of 128 and the standard deviation of 8). Thus, the large majority of the attacking packets sent by the neighbour will, when their iBF field is decrypted upon arrival in the trust domain, produce an iBF having a fill factor greater than the maximum allowable fill factor and, hence, the packets will be dropped.

Another way of making it more difficult for an attacker to guess a valid encrypted iBF (of length m) is to:

1. Concatenate the iBF (preferably after applying bit permutation) with t pre-specified bits that are e.g. all zeros.
2. Encrypt all m+t bits.

Now an attacker needs to guess a bitstring that is m+t bits long, and which decrypts into a bitstring ending with the t known bits. The probability of finding such a string is low, being $2^{-t}$.

The present invention has a number of advantages. As explained above, the present invention enables secure use of iBF-based routing even in the presence of non-secure routers/switches. Security can be handled at a domain border, so that only border routers are required to be secure routers. The routers and switches elsewhere in a domain can be either secure or non-secure variants.

The core of the invention is the modification of the bits in the iBF, for example by secure keyed permutation, with the modification applied before passing the iBF to a router outside the trusted domain, and then performing the reverse operation when a packet is received from a node outside the trusted domain.

Compared to the routing methods described in WO 2010/022767, WO 2010/022799, and WO 2011/091871, the present invention enables security and privacy of intra-domain iBF information, even if the domain utilizes non-secure iBF elements in its network. Only the routers at the domain boundary are require to be secure iBF routers.

This invention enables a domain to form an identifier specifying a path and to let an untrusted neighboring domain (a client, ally, or a competitor) utilize that identifier for a particular flow. The details of the network topology within the trusted domain remain hidden from nodes in the untrusted domain, which helps the network operator to keep its network secure. As an example, when using inter-domain MPLS the operators do not want to reveal the IP addresses of their routers, as this would lead to the possibility of attacks against them. According to the invention, a path can be opened to a given router for a pre-defined time and only with regards to a specific flow.

Moreover, only node NB1 in the example of figure 5 is required to perform the present invention. The nodes NB2, NB3 and NB4 operate in exactly the same way as before, and require no modification. The invention is effected by the "boundary node", that is by the node which passes the signalling packet to domain A in construction of the iBF, and which receives a packet from domain A during subsequent routing.

A further advantage of the invention is that is may also prevent loops and flow duplication. For loop prevention it is not necessary for the permutations used to depend on packet contents, and a static permutation may be used.

Loop and flow duplication happens when a consecutive series of "false positives" causes a packet to follow a loop through nodes such that it returns to a border router in the multicast tree specified by the iBF. In such a situation, the border router will forward the packet along the links specified in the iBF in the packet - but these match exactly the same links as before. Hence, the packet will inevitably follow the loop until it reaches its hop count limit and is dropped. Each round of looping causes an additional copy of the packet to be forwarded to all the nodes that reside in the sub-tree of the border router, which may be a considerable waste of resources.

The described invention addresses this problem as follows. Each iBF-based router that inspects the iBF contained in a received packet applies a reversible random bit permutation (or other modification) to the bits of the iBF, performs the forwarding decision based on the results of the permutation, and updates the iBF in the header. Even if a packet should follow a loop and return to a router, the effect of the random bit permutation (or other modification) is that, when the packet is received at the router for the second time after following the loop, the bits in the iBF will be in random positions compared to where they need to be to match the local edge-pair label in the router. Assuming the bit positions are random, the probability of matching the same links (for both the "correct" path and the ones that caused the loop) are approximately the same as having false positives on any link.

The invention may be combined with the method described in WO 2011/081588 as follows.

WO 2011/081588 provides means for "on-line" generation of a per-packet-encrypted Bloom Filter. In essence all packets routed along a sequence of links have unique "random looking" iBFs so that, even if past iBFs are known, it is not possible for an attacker to predict the value of the iBF for the next packet along the same path. Moreover, each router may process the iBF at "line-speed", i.e. no buffering is needed and the "decryption" of the iBF can be performed incrementally, as each bit of the iBF arrives at the iBF. Accordingly, if routers in domain A of figure 5 use the techniques of WO 2011/081588, a node at the border of domain A may apply a bit-permutation to the (already encrypted) iBF produced inside A (before forwarding to domain B).

**Claims**

1. A network node (NB1), the network node being located within a domain (B) and adapted to:

   receive, from another node (NB2), a packet having an in-packet Bloom filter or Bloom filter equivalent encoding information about a route within the domain;
   reversibly modify the in-packet Bloom filter or Bloom filter equivalent; and
   forward the packet with its header containing the modified Bloom filter or Bloom filter equivalent to another node;
   wherein the node (NB1) is adapted to reversibly modify the in-packet Bloom filter or Bloom filter equivalent in a manner which is linear with respect to the operation used to add links to the Bloom filter or Bloom filter equivalent;
   **characterised in that** the node is adapted to reversibly modify the in-packet Bloom filter or Bloom filter equivalent by applying a bit permutation to the Bloom filter or Bloom filter equivalent.

2. A node as claimed in claim 1 wherein forwarding the packet to another node comprises forwarding the packet to another node (NA3) in another domain (A).

3. A node as claimed in claim 1 wherein forwarding the packet to another node comprises forwarding the packet to another node in the domain (B).

4. A network node (TM), the network node being associated with a domain and adapted to:

   generate a Bloom filter or Bloom filter equivalent encoding information about a route within a domain (B) of a network;
   reversibly modify the Bloom filter or Bloom filter equivalent; and
   forward the modified Bloom filter or Bloom filter to another node (NB1) for inclusion in the header of a packet to be sent from the another node (NB1);
   wherein the node is adapted to reversibly modify the Bloom filter or Bloom filter equivalent in a manner which is linear with respect to the operation used to add links to the Bloom filter or Bloom filter equivalent equivalent;
   **characterised in that** the node (TM) is adapted to reversibly modify the in-packet Bloom filter or Bloom filter equivalent by applying a bit permutation to the Bloom filter or Bloom filter equivalent.

5. A node (NB1, TM) as claimed in any preceding claim and adapted to modify the Bloom filter or Bloom filter equivalent so as not to substantially increase the number of "1"s in the Bloom filter or Bloom filter equivalent.

6. A node (NB1, TM) as claimed in any preceding claim and adapted to modify the Bloom filter or Bloom filter equivalent by applying a random or pseudo-random bit permutation to the Bloom filter or Bloom filter equivalent.

7. A node (NB1, TM) as claimed in any preceding claim and adapted to modify the Bloom filter or Bloom filter equivalent by applying a bit permutation that is dependent on at least one of a key and a session identifier.

8. A node (NB1, TM) as claimed in any one of claims 1 to 7 and adapted to further modify the Bloom filter or Bloom filter equivalent by encrypting the Bloom filter or Bloom filter equivalent.

9. A node (NB1, TM) as claimed in claim 8 and adapted to concatenate the Bloom filter or Bloom filter with t pre-specified bits (where t is a positive integer) before encrypting the Bloom filter or Bloom filter equivalent.

10. A network node (NB1), the network node being located within a domain (B) and adapted to:

    receive, from another node (NA3), a packet having a packet header containing an in-packet Bloom filter or Bloom filter equivalent that contains routing information to which a modification comprising a bit permutation has been applied, the modification being linear with respect to the operation used to add links to the Bloom filter or Bloom filter equivalent, the routing information representing a route within the domain; and
    recover the routing information from the Bloom filter or Bloom filter equivalent by applying a reverse bit permutation to the Bloom filter or Bloom filter equivalent.

11. A network node (NB1) as claimed in claim 10, and adapted to forward the packet according to the recovered routing information.

12. A network node (NB1) as claimed in claim 10, or 11 wherein the modification applied to the Bloom filter or Bloom filter equivalent further comprised an encryption and wherein the network node is adapted to recover the routing information by decrypting the Bloom filter or Bloom filter equivalent.

13. A network node (NB1) as claimed in claim 12 and adapted to compare the fill factor of the decrypted Bloom filter or Bloom filter equivalent with a preset threshold, and to drop the packet if the fill factor of the decrypted Bloom filter or Bloom filter equivalent exceeds the preset threshold.

14. A method of routing a packet comprising:

receiving, at a node (NB1) in a domain (B), a packet having an in-packet Bloom filter or Bloom filter equivalent encoding information about a route within the domain (B);
reversibly modifying the in-packet Bloom filter or Bloom filter equivalent; and
forwarding the packet with its header containing the modified Bloom filter or Bloom filter equivalent to another node (NA3);
wherein modifying the in-packet Bloom filter or Bloom filter equivalent comprises modifying the in-packet Bloom filter or Bloom filter equivalent in a manner which is linear with respect to the operation used to add links to the Bloom filter or Bloom filter equivalent;
**characterised in that** the method comprises reversibly modifying the in-packet Bloom filter or Bloom filter equivalent by applying a reverse bit permutation to the Bloom filter or Bloom filter equivalent.

15. A method of providing packet routing information, the method comprising:

generating, at a node (TM), a Bloom filter or Bloom filter equivalent encoding information about a route within a domain of a network;
reversibly modifying the Bloom filter or Bloom filter equivalent; and
forwarding the modified Bloom filter or Bloom filter equivalent to another node (NB1) for inclusion in the header of a packet to be sent from the another node;
wherein modifying the in-packet Bloom filter or Bloom filter equivalent comprises modifying the Bloom filter or Bloom filter equivalent in a manner which is linear with respect to the operation used to add links to the Bloom filter or Bloom filter equivalent;
**characterised in that** the method comprises reversibly modifying the in-packet Bloom filter or Bloom filter equivalent by applying a reverse bit permutation to the Bloom filter or Bloom filter equivalent.

16. A method of providing packet routing information, the method comprising:

receiving, at a network node (NB1) from another node (NA3), a packet having a packet header containing an in-packet Bloom filter or Bloom filter equivalent that contains routing information to which a modification comprising a bit permutation has been applied, the modification being linear with respect to the operation used to add links to the Bloom filter or Bloom filter equivalent, the routing information representing a route within the domain; and
recovering the routing information from the Bloom filter or Bloom filter equivalent by applying a reverse bit permutation to the Bloom filter or Bloom filter equivalent.

**Patentansprüche**

1. Netzwerkknoten (NB1), wobei der Netzwerkknoten sich innerhalb einer Domäne (B) befindet und für Folgendes eingerichtet ist:

Empfangen eines Pakets von einem anderen Knoten (NB2), wobei das Paket ein paketinternes Bloomfilter oder Bloomfilter-Äquivalent hat, das Information über eine Route innerhalb der Domäne codiert;
reversibles Modifizieren des paketinternen Bloomfilters oder Bloomfilter-Äquivalents; und
Weiterleiten des Pakets mit seinem Header, der das modifizierte Bloomfilter oder Bloomfilter-Äquivalent enthält, zu einem anderen Knoten;

wobei der Knoten (NB1) dafür eingerichtet ist, das paketinterne Bloomfilter oder Bloomfilter-Äquivalent in einer solchen Weise reversibel zu modifizieren, die linear in Bezug auf die Operation ist, die verwendet wird, um dem Bloomfilter oder Bloomfilter-Äquivalent Übertragungsstrecken hinzuzufügen;

**dadurch gekennzeichnet, dass** der Knoten dafür eingerichtet ist, das paketinterne Bloomfilter oder Bloomfilter-Äquivalent durch Anwendung einer Bitpermutation auf das Bloomfilter oder Bloomfilter-Äquivalent reversibel zu modifizieren.

2. Knoten nach Anspruch 1, wobei die Weiterleitung des Pakets an einen anderen Knoten umfasst: Weiterleiten des Pakets an einen anderen Knoten (NA3) in einer anderen Domäne (A).

3. Knoten nach Anspruch 1, wobei die Weiterleitung des Pakets an einen anderen Knoten umfasst: Weiterleiten des Pakets an einen anderen Knoten in der Domäne (B).

4. Netzwerkknoten (TM), wobei der Netzwerkknoten einer Domäne zugeordnet ist und für Folgendes eingerichtet ist:

Erzeugen eines Bloomfilters oder Bloomfilter-Äquivalents, das Information über eine Route innerhalb einer Domäne (B) eines Netzwerks codiert;
reversibles Modifizieren des Bloomfilters oder Bloomfilter-Äquivalents; und
Weiterleiten des modifizierten Bloomfilters oder Bloomfilter-Äquivalents an einen anderen Knoten (NB1) zur Aufnahme in den Header eines Pakets, das von dem anderen Knoten (NB 1) zu senden ist;
wobei der Knoten dafür eingerichtet ist, das Bloomfilter oder das Bloomfilter-Äquivalent in einer Weise reversibel zu modifizieren, die linear in Bezug auf die Operation ist, die verwendet wird, um dem Bloomfilter oder Bloomfilter-Äquivalent Übertragungsstrecken hinzuzufügen;
**dadurch gekennzeichnet, dass** der Knoten (TM) dafür eingerichtet ist, das paketinterne Bloomfilter oder Bloomfilter-Äquivalent durch Anwendung einer Bitpermutation auf das Bloomfilter oder Bloomfilter-Äquivalent reversibel zu modifizieren.

5. Knoten (NB1, TM) nach einem der vorhergehenden Ansprüche und dafür eingerichtet, das Bloomfilter oder Bloomfilter-Äquivalent zu modifizieren, um die Anzahl der "1" im Bloomfilter oder Bloomfilter-Äquivalent nicht wesentlich zu erhöhen.

6. Knoten (NB1, TM) nach einem der vorhergehenden Ansprüche und dafür eingerichtet, das Bloomfilter oder Bloomfilter-Äquivalent durch Anwendung einer Zufalls- oder Pseudozufalls-Bitpermutation auf das Bloomfilter oder Bloomfilter-Äquivalent zu modifizieren.

7. Knoten (NB1, TM) nach einem der vorhergehenden Ansprüche und dafür eingerichtet, das Bloomfilter oder Bloomfilter-Äquivalent durch Anwendung einer Bitpermutation zu modifizieren, die von mindestens einem, nämlich einem Schlüssel und/oder einer Sitzungskennung abhängig ist.

8. Knoten (NB1, TM) nach einem der Ansprüche 1 bis 7 und dafür eingerichtet, das Bloomfilter oder Bloomfilter-Äquivalent durch Verschlüsselung des Bloomfilters oder Bloomfilter-Äquivalents weiter zu modifizieren.

9. Knoten (NB1, TM) nach Anspruch 8 und dafür eingerichtet, das Bloomfilter oder Bloomfilter-Äquivalent mit t vorgegebenen Bits (wobei t eine positive ganze Zahl ist) zu verketten, bevor das Bloomfilter oder Bloomfilter-Äquivalent verschlüsselt wird.

10. Netzwerkknoten (NB1), wobei der Netzwerkknoten sich innerhalb einer Domäne (B) befindet und für Folgendes eingerichtet ist:

Empfangen eines Pakets von einem anderen Knoten (NA3), wobei das Paket einen Paketheader hat, der ein Bloomfilter oder Bloomfilter-Äquivalent enthält, das Routing-Information enthält, auf die eine Modifikation, die eine Bitpermutation umfasst, angewendet worden ist, wobei die Modifikation linear in Bezug auf die Operation ist, die verwendet wird, um dem Bloomfilter oder Bloomfilter-Äquivalent Übertragungsstrecken hinzuzufügen, wobei die Routing-Information eine Route innerhalb der Domäne darstellt; und
Zurückgewinnen der Routing-Information aus dem Bloomfilter oder Bloomfilter-Äquivalent durch Anwendung einer umgekehrten Bitpermutation auf das Bloomfilter oder Bloomfilter-Äquivalent.

11. Netzwerkknoten (NB1) nach Anspruch 10 und dafür eingerichtet, das Paket gemäß der zurückgewonnenen Routing-Information wieterzuleiten.

**12.** Netzwerkknoten (NB 1) nach Anspruch 10 oder 11, wobei die auf das Bloomfilter oder Bloomfilter-Äquivalent angewendete Modifikation ferner eine Verschlüsselung umfasst und wobei der Netzwerkknoten dafür eingerichtet ist, die Routing-Information durch Entschlüsselung des Bloomfilters oder Bloomfilter-Äquivalents zurückzugewinnen.

**13.** Netzwerkknoten (NB1) nach Anspruch 12 und dafür eingerichtet, den Füllfaktor des entschlüsselten Bloomfilters oder Bloomfilter-Äquivalents mit einem vorher festgelegten Schwellenwert zu vergleichen und das Paket zu verwerfen, wenn der Füllfaktor des entschlüsselten Bloomfilters oder Bloomfilter-Äquivalents den vorher festgelegten Schwellenwert überschreitet.

**14.** Verfahren zur Routensteuerung eines Paketes, umfassend:

Empfangen eines Pakets an einem Knoten (NB1) in einer Domäne (B), wobei das Paket ein paketinternes Bloomfilter oder Bloomfilter-Äquivalent hat, das Information über eine Route in der Domäne (B) codiert; reversibles Modifizieren des paketinternen Bloomfilters oder Bloomfilter-Äquivalents; und Weiterleiten des Pakets mit seinem Header, der das modifizierte Bloomfilter oder Bloomfilter-Äquivalent enthält, zu einem anderen Knoten (NA3); wobei das Modifizieren des paketinternen Bloomfilters oder Bloomfilter-Äquivalents umfasst: Modifizieren des paketinternen Bloomfilters oder Bloomfilter-Äquivalents in einer Weise, die linear in Bezug auf die Operation ist, die verwendet wird, um dem Bloomfilter oder Bloomfilter-Äquivalent Übertragungsstrecken hinzuzufügen, **dadurch gekennzeichnet, dass** das Verfahren umfasst: reversibles Modifizieren des paketinternen Bloomfilters oder Bloomfilter-Äquivalents durch Anwendung einer umgekehrten Bitpermutation auf das Bloomfilter oder Bloomfilter-Äquivalent.

**15.** Verfahren zur Bereitstellung von Paket-Routing-Information, wobei das Verfahren umfasst:

an einem Knoten (TM) erfolgendes Erzeugen eines Bloomfilters oder Bloomfilter-Äquivalents, das Information über eine Route innerhalb einer Domäne eines Netzwerks codiert; reversibles Modifizieren des Bloomfilters oder Bloomfilter-Äquivalents; und Weiterleiten des modifizierten Bloomfilters oder Bloomfilter-Äquivalents an einen anderen Knoten (NB1) zur Aufnahme in den Header eines Pakets, das von dem anderen Knoten zu senden ist, wobei das Modifizieren des paketinternen Bloomfilters oder Bloomfilter-Äquivalents umfasst: Modifizieren des Bloomfilters oder Bloomfilter-Äquivalents in einer Weise, die linear in Bezug auf die Operation ist, die verwendet wird, um dem Bloomfilter oder Bloomfilter Äquivalent Übertragungsstrecken hinzuzufügen; **dadurch gekennzeichnet, dass** das Verfahren umfasst: reversibles Modifizieren des paketinternen Bloomfilters oder Bloomfilter-Äquivalents durch Anwendung einer umgekehrten Bitpermutation auf das Bloomfilter oder Bloomfilter-Äquivalent.

**16.** Verfahren zur Bereitstellung von Paket-Routing-Information, wobei das Verfahren umfasst:

Empfangen eines Pakets von einem anderen Knoten (NA3) an einem Netzwerkknoten (NB1), wobei der Netzwerkknoten sich innerhalb einer Domäne befindet, wobei das Paket einen Paketheader hat, der ein paketinternes Bloomfilter oder Bloomfilter-Äquivalent enthält, das Routing-Information enthält, auf die eine Modifikation, die eine Bitpermutation umfasst, angewendet worden ist, wobei die Modifikation linear in Bezug auf die Operation ist, die verwendet wird, um dem Bloomfilter oder Bloomfilter-Äquivalent Übertragungsstrecken hinzuzufügen, wobei die Routing-Information eine Route innerhalb der Domäne darstellt; und Zurückgewinnen der Routing-Information aus dem Bloomfilter oder Bloomfilter-Äquivalent durch Anwendung einer umgekehrten Bitpermutation auf das Bloomfilter oder Bloomfilter-Äquivalent.

**Revendications**

**1.** Noeud de réseau (NB1), dans lequel le noeud de réseau est situé au sein d'un domaine (B), et est apte à :

recevoir, en provenance d'un autre noeud (NB2), un paquet présentant un filtre de Bloom intra-paquet ou un équivalent de filtre de Bloom codant des informations connexes à un chemin au sein du domaine ; modifier de manière réversible le filtre de Bloom intra-paquet ou l'équivalent de filtre de Bloom ; et

acheminer le paquet avec son en-tête contenant le filtre de Bloom ou équivalent de filtre de Bloom modifié, vers un autre noeud ;

dans lequel le noeud (NB1) est apte à modifier de manière réversible le filtre de Bloom intra-paquet ou l'équivalent de filtre de Bloom, d'une manière qui est linéaire par rapport à l'opération utilisée en vue d'ajouter des liaisons au filtre de Bloom ou à l'équivalent de filtre de Bloom ;

**caractérisé en ce que** le noeud est apte à modifier de manière réversible le filtre de Bloom intra-paquet ou l'équivalent de filtre de Bloom en appliquant une permutation de bits au filtre de Bloom ou à l'équivalent de filtre de Bloom.

2. Noeud selon la revendication 1, dans lequel l'acheminement du paquet vers un autre noeud consiste à acheminer le paquet vers un autre noeud (NA3) d'un autre domaine (A).

3. Noeud selon la revendication 1, dans lequel l'acheminement du paquet vers un autre noeud consiste à acheminer le paquet vers un autre noeud dans le domaine (B).

4. Noeud de réseau (TM), dans lequel le noeud de réseau est associé à un domaine, lequel est apte à :

    générer un filtre de Bloom ou un équivalent de filtre de Bloom codant des informations connexes à un chemin au sein d'un domaine (B) d'un réseau ;

    modifier de manière réversible le filtre de Bloom ou l'équivalent de filtre de Bloom ; et

    acheminer le filtre de Bloom ou équivalent de filtre de Bloom modifié vers un autre noeud (NB1) afin de l'inclure dans l'en-tête d'un paquet devant être envoyé à partir de l'autre noeud (NB1) ;

    dans lequel le noeud est apte à modifier de manière réversible le filtre de Bloom ou l'équivalent de filtre de Bloom d'une manière qui est linéaire par rapport à l'opération utilisée en vue d'ajouter des liaisons au filtre de Bloom ou à l'équivalent de filtre de Bloom ;

    **caractérisé en ce que** le noeud (TM) est apte à modifier de manière réversible le filtre de Bloom intra-paquet ou l'équivalent de filtre de Bloom en appliquant une permutation de bits au filtre de Bloom ou à l'équivalent de filtre de Bloom.

5. Noeud (NB1, TM) selon l'une quelconque des revendications précédentes, lequel est apte à modifier le filtre de Bloom ou l'équivalent de filtre de Bloom, de manière à ne pas augmenter sensiblement le nombre de bits « 1 » dans le filtre de Bloom ou l'équivalent de filtre de Bloom.

6. Noeud (NB2, TM) selon l'une quelconque des revendications précédentes, lequel est apte à modifier le filtre de Bloom ou l'équivalent de filtre de Bloom en appliquant une permutation de bits aléatoire ou pseudo-aléatoire au filtre de Bloom ou à l'équivalent de filtre de Bloom.

7. Noeud (NB2, TM) selon l'une quelconque des revendications précédentes, lequel est apte à modifier le filtre de Bloom ou l'équivalent de filtre de Bloom en appliquant une permutation de bits qui dépend d'au moins l'un des éléments parmi une clé et un identifiant de session.

8. Noeud (NB 1, TM) selon l'une quelconque des revendications 1 à 7, lequel est apte à modifier en outre le filtre de Bloom ou l'équivalent de filtre de Bloom en chiffrant le filtre de Bloom ou l'équivalent de filtre de Bloom.

9. Noeud (NB1, TM) selon la revendication 8, lequel est apte à concaténer le filtre de Bloom ou l'équivalent de filtre de Bloom avec t bits spécifiés au préalable (où t est un nombre entier positif) avant de chiffrer le filtre de Bloom ou l'équivalent de filtre de Bloom.

10. Noeud de réseau (NB1), dans lequel le noeud de réseau est situé au sein d'un domaine (B) et est apte à :

    recevoir, en provenance d'un autre noeud (NA3), un paquet présentant un en-tête de paquet contenant un filtre de Bloom intra-paquet ou un équivalent de filtre de Bloom qui contient des informations d'acheminement auxquelles une modification comprenant une permutation de bits a été appliquée, la modification étant linéaire par rapport à l'opération utilisée en vue d'ajouter des liaisons au filtre de Bloom ou à l'équivalent de filtre de Bloom, les informations d'acheminement représentant un chemin au sein du domaine ; et

    récupérer les informations d'acheminement à partir du filtre de Bloom ou de l'équivalent de filtre de Bloom en appliquant une permutation de bits inverse au filtre de Bloom ou à l'équivalent de filtre de Bloom.

**11.** Noeud de réseau (NB1) selon la revendication 10, lequel est apte à acheminer le paquet selon les informations d'acheminement récupérées.

**12.** Noeud de réseau (NB1) selon la revendication 10 ou 11, dans lequel la modification appliquée au filtre de Bloom ou à l'équivalent de filtre de Bloom comprend en outre un chiffrement, et dans lequel le noeud de réseau est apte à récupérer les informations d'acheminement en déchiffrant le filtre de Bloom ou l'équivalent de filtre de Bloom.

**13.** Noeud de réseau (NB1) selon la revendication 12, lequel est apte à comparer le facteur de remplissage du filtre de Bloom ou équivalent de filtre de Bloom déchiffré à un seuil prédéfini, et à abandonner le paquet si le facteur de remplissage du filtre de Bloom ou équivalent de filtre de Bloom déchiffré excède le seuil prédéfini.

**14.** Procédé d'acheminement d'un paquet, consistant à :

recevoir, au niveau d'un noeud (NB1) au sein d'un domaine (B), un paquet présentant un filtre de Bloom intra-paquet ou un équivalent de filtre de Bloom codant des informations connexes à un chemin au sein du domaine (B) ;
modifier de manière réversible le filtre de Bloom intra-paquet ou l'équivalent de filtre de Bloom ; et
acheminer le paquet avec son en-tête contenant le filtre de Bloom ou équivalent de filtre de Bloom modifié, vers un autre noeud (NA3) ;
dans lequel la modification du filtre de Bloom intra-paquet ou de l'équivalent de filtre de Bloom consiste à modifier le filtre de Bloom intra-paquet ou l'équivalent de filtre de Bloom d'une manière qui est linéaire par rapport à l'opération utilisée en vue d'ajouter des liaisons au filtre de Bloom ou à l'équivalent de filtre de Bloom ;
**caractérisé en ce que** le procédé consiste à modifier de manière réversible le filtre de Bloom intra-paquet ou l'équivalent de filtre de Bloom en appliquant une permutation de bits inverse au filtre de Bloom ou à l'équivalent de filtre de Bloom.

**15.** Procédé de fourniture d'informations d'acheminement de paquets, le procédé consistant à :

générer, au niveau d'un noeud (TM), un filtre de Bloom ou un équivalent de filtre de Bloom codant des informations connexes à un chemin au sein d'un domaine d'un réseau ;
modifier de manière réversible le filtre de Bloom ou l'équivalent de filtre de Bloom ; et
acheminer le filtre de Bloom ou équivalent de filtre de Bloom modifié vers un autre noeud (NB1), afin de l'inclure dans l'en-tête d'un paquet devant être envoyé à partir de l'autre noeud ;
dans lequel la modification du filtre de Bloom intra-paquet ou de l'équivalent de filtre de Bloom consiste à modifier le filtre de Bloom ou l'équivalent de filtre de Bloom d'une manière qui est linéaire par rapport à l'opération utilisée en vue d'ajouter des liaisons au filtre de Bloom ou à l'équivalent de filtre de Bloom ;
**caractérisé en ce que** le procédé consiste à modifier de manière réversible le filtre de Bloom intra-paquet ou l'équivalent de filtre de Bloom en appliquant une permutation de bits inverse au filtre de Bloom ou à l'équivalent de filtre de Bloom.

**16.** Procédé de fourniture d'informations d'acheminement de paquets, le procédé consistant à :

recevoir, au niveau d'un noeud de réseau (NB1), en provenance d'un autre noeud (NA3), dans lequel le noeud de réseau est situé au sein d'un domaine, un paquet présentant un en-tête de paquet contenant un filtre de Bloom intra-paquet ou un équivalent de filtre de Bloom qui contient des informations d'acheminement auxquelles une modification comprenant une permutation de bits a été appliquée, la modification étant linéaire par rapport à l'opération utilisée en vue d'ajouter des liaisons au filtre de Bloom ou à l'équivalent de filtre de Bloom, les informations d'acheminement représentant un chemin au sein du domaine ; et
récupérer les informations d'acheminement à partir du filtre de Bloom ou de l'équivalent de filtre de Bloom, en appliquant une permutation de bits inverse au filtre de Bloom ou à l'équivalent de filtre de Bloom.

**Topology zfilter formation**

IF 1-2      IF S-1
00100001    00001001

(OR)

00101001

**4**

**Node 1: match and forward**

IF 1-2   00100001

zfilter 00101001 ⟶ (&) ⟶ (=) ⟶

**5**

| Flow ID | 00101001 | DATA |

**2**

Source:
Match and forward

Source | IF S - 1 — IF 1 - 3 | Node

**1**

**3**

IF 1 - 1

IF 1 - 2

| Interface | Link ID |
|-----------|---------|
| IF S - 1  | 00001001 |

| Interface | Link ID |
|-----------|----------|
| IF 1 - 1  | 01000001 |
| IF 1 - 2  | 00100001 |
| IF 1 - 3  | 10000100 |

*Figure 1. Basic iBF functionality with a single identifier per link*

K(t)

Out port

IN port

Flow ID

Z

LIT(d)

OR

| IP | d | BF |

| IP | d | BF |

*Figure 2.* Using the function Z to dynamically compute a link identifier

| 1 0 0 0 1 1 |

1 0

| 0 1 1 0 1 0 |

*Figure 3.* Example of a permutation of a bitstring

| 1 0 0 0 1 1 |

0 1

| 0 1 1 0 1 0 |

*Figure 4.* Reverse permutation of a bitstring

Figure 5

Receive packet     1

↓

Reversibly modify iBF     2

↓

Forward packet     3

Figure 6

Generate iBF     1

↓

Reversibly modify iBF     2

↓

Forward iBF     3

Figure 7

Receive packet     1

↓

Recover routing information     2

↓

Forward packet     3

Figure 8

Receive packet      1

↓

Decrypt routing information      2

↓

Compare fill factor      3

↓

Forward/drop packet      4

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010022767 A
- EP 2008061167 W
- WO 2010022799 A
- EP 2008063647 W
- WO 2011091871 A
- EP 2009062785 W
- WO 2011081588 A
- SE 2010050001 W

### Non-patent literature cited in the description

- **BRODER ; MITZENMACHER.** Network Applications of Bloom Filters: A Survey. *Internet Mathematics,* 2002, vol. 1 (4), 485-509
- **IMAD.** *Packet Coding for Strong Anonymity in Ad-Hoc Networks*
- **Y. HILEWITZ ; Z SHI ; R. LEE.** Comparing Fast Implementations of Bit Permutation Instructions. *proceedings of 38th annual Asilomar Conference on Signals, Systems, and Computers,* 2004, 1856-1863
- **P. JOKELA ; A. ZAHEMSZKY ; C. ESTEVE ROTHENBERG ; S. ARIANFAR ; P. NIKANDER.** LIPSIN: Line speed publish/subscribe inter-networking. *Proceedings of ACM SIGCOMM,* 2009
- **CHRISTIAN ESTEVE ; PETRI JOKELA ; PEKKA NIKANDER ; MIKKO SÄRELÄ ; JUKKA YLITALO.** Self-routing Denial-of-Service Resistant Capabilities using In-packet Bloom Filters. *proceedings of European Conference on Computer Network Defence (EC2ND,* 2009